# EUROPEAN PATENT APPLICATION

(11) **EP 1 614 581 A2**
(43) Date of publication of application: **11.01.2006**
(21) Application number: 05105823.8
(22) Date of filing: 29.06.2005
(51) Int. Cl.: B60N 2/005

(54) **Arrangement of the seats in the passenger compartment of a three-or four seat motor car**

(30) Priority: 05.07.2004 IT TO20040087
(71) Applicant: ITALDESIGN-GIUGIARO S.p.A, 10121 Torino (IT)
(72) Inventor: Mantovani, Aldo, 10024 Moncalieri (Torino) (IT)
(74) Representative: Rondano, Davide

(57) **Abstract**

A three- or four-seat motorcar (10) comprises a body (12) which encloses a passenger compartment (16), a frame (20) which supports a flat floor (24) without a centre tunnel, a pair of front seats (26, 28) for the driver and for a first passenger, respectively, and a rear seat (30) for a second passenger of average height and for a possible third passenger of small height. The front seats (26, 28) are transversely spaced from each other in such a manner as to define an intermediate free space of such size as to accommodate the legs of the second passenger and longitudinally offset from each other by a distance substantially equal to the thickness of their seat backs. The rear seat (30) forms a centre seat capable of accommodating the second passenger and a side seat, behind the front passenger's seat (28), capable of accommodating the possible third passenger.

## Description

The present invention relates to a three- or four-seat motorcar, and more specifically to the arrangement of the seats inside the passenger compartment of a motorcar of this type.

Traditionally, in four-seat motorcars the seats for the driver and the passengers are arranged inside the passenger compartment in two rows, that is to say, a first front row comprising a pair of seats, transversely spaced from each other and longitudinally aligned with each other, and a second rear row comprising either one seat capable of accommodating two persons or two seats, transversely spaced from each other and longitudinally aligned with each other, each of which is capable of accommodating only one person.

It is the object of the present invention to provide an arrangement of the seats in the passenger compartment of a three- or four-seat motorcar which makes it possible to minimise the inner space necessary to accommodate three or four persons on board and therefore to reduce the outer size of the vehicle, while ensuring a good comfort.

This and other objects are achieved according to the invention by virtue of a three- or four-seat motorcar having an arrangement of the seats inside the passenger compartment as defined in independent Claim 1. Further advantageous characteristics of the invention are defined in the dependent claims.

The characteristics and the advantages of the invention will become clear from the detailed description which follows, given purely by way of non-limiting example with reference to the appended drawings, in which:

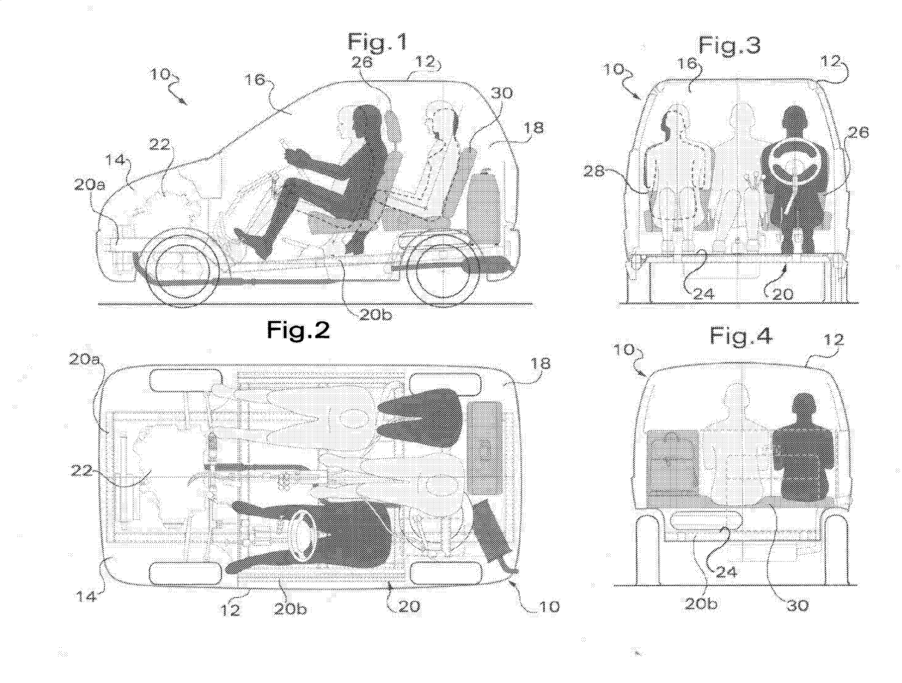

Figure 1 is a side elevation view which schematically illustrates the arrangement of the seats inside the passenger compartment of a three- or four-seat motorcar according to the present invention;
Figure 2 is a plan view of the passenger compartment of Figure 1;
Figure 3 is a front view of the passenger compartment of Figure 1; and
Figure 4 is a rear view of the passenger compartment of Figure 1.

With reference to the figures, a three- or four-seat motorcar according to the invention is generally indicated 10 and comprises:
a body 12 (of which only the outer profile is illustrated) which encloses an engine compartment 14 at the front, a passenger compartment 16 in the centre and a luggage compartment 18 at the rear; and
a frame 20 comprising a front portion 20a, which supports an engine 22 of per-se-known type, and a rear portion 20b, which is arranged at a lower level than the first and supports a flat floor 24 without a centre tunnel.

A pair of front seats 26 and 28 for the driver and the passenger, respectively, and a rear seat 30, capable of accommodating one or two passengers, are arranged on the floor 24. The two front seats 26 and 28 are transversely spaced from each other in such a manner as to define an intermediate free space in which the legs of a second passenger of average height sitting on the rear seat 30 can be comfortably accommodated. The two front seats 26 and 28 are also longitudinally offset by a distance approximately equal to the thickness of the seat back, the driver's seat 26 being positioned behind with respect to the passenger's seat 28. The rear seat 30 forms a centre seat capable of accommodating the above-mentioned second passenger, the legs of which can be accommodated in the free space between the two front seats 26 and 28, and a side seat behind the front passenger's seat 28, capable of accommodating a possible third passenger of small height. The arrangement of the seats is such that the knees of the possible third passenger sitting on the rear seat 30 arrive longitudinally at the same level as the ankle of the driver sitting on the front seat 26. The free space next to the rear seat 30 can be conveniently used as a luggage compartment, possibly open towards the real luggage compartment 18.

According to a non-illustrated variant of construction, the rear seat 30 can be replaced by two separate seats, that is to say, a centre seat intended to accommodate the second passenger and a side seat, for example of smaller size than the centre seat, intended to accommodate the possible third passenger. Alternatively, only one centre rear seat can be provided.

As will be apparent in view of the description and the figures, a seat arrangement according to the invention makes it possible greatly to reduce the length of the passenger compartment and hence of the whole vehicle, by virtue of the rear seat (or the rear seats) being arranged at a longitudinal distance from the front seats far smaller than the one normally provided. However, the comfort in the rear of the vehicle is not adversely affected, since there is provided enough space between the two front seats in which to accommodate the legs of the rear passenger sitting in the centre and the vehicle floor is deprived of the centre tunnel.

Naturally, the principle of the invention remaining unchanged, embodiments and manufacturing details may vary widely from those described and illustrated purely by way of non-limiting example.

## Claims

1. Three- or four-seat motorcar (10), comprising a body (12) which encloses a passenger compartment (16), a frame (20) which supports a floor (24), a pair of front seats (26, 28) for the driver and for a first passenger, respectively, and at least one rear seat (30) for at least one second passenger of average height, **characterized in that**
the floor (24) is a flat floor, without a centre tunnel;
the front seats (26, 28) are transversely spaced from each other in such a manner as to define an intermediate free space of such size as to accommodate the legs of said second passenger and longitudinally offset from each other by a distance substantially equal to the thickness of their seat backs; and
said at least one rear seat (30) forms a centre seat capable of accommodating said second passenger.

2. Motorcar according to Claim 1, including only one rear seat (30).

3. Motorcar according to Claim 2, wherein said one single rear seat (30) forms a side seat behind the front passenger's seat (28) capable of accommodating a third passenger.

4. Motorcar according to Claim 1, including a first rear centre seat capable of accommodating said second passenger and a second rear seat, separate from the first, which is arranged behind the front passenger's seat (28) and is capable of accommodating a third passenger.

5. Motorcar according to Claim 1, wherein the seats (26, 28, 30) are arranged in such a manner that a possible third passenger sitting on said at least one rear seat (30) has its knees arranged longitudinally at the same level as the ankle of the driver sitting on the respective front seat (26).

6. Motorcar according to Claim 4, wherein said second rear seat is smaller than the first.
